# EUROPEAN PATENT APPLICATION

(11) **EP 1 080 817 A2**
(43) Date of publication of application: **07.03.2001**
(21) Application number: 00117718.7
(22) Date of filing: 17.08.2000
(51) Int. Cl.: B23K 3/08

(54) **Brazing jig**

(30) Priority: 19.08.1999 JP 23302899
(71) Applicant: NGK INSULATORS, LTD., Nagoya-City, Aichi Prefecture 467-8530 (JP)
(72) Inventor: Hanzawa, Shigeru, NGK Insulators, Ltd., Nagoya-city, Aichi-prefecture 467-8530 (JP); Nakano, Kenji, NGK Insulators, Ltd., Nagoya-city, Aichi-prefecture 467-8530 (JP)
(74) Representative: Leson, Thomas Johannes Alois, Dipl.-Ing.

(57) **Abstract**

There is provided a brazing jig structurally made of stainless steel, as a more common material, being arranged with a composite material at least on those portions which come into contact with a member to be brazed and also on portions onto which the brazing material may trickle down during the brazing process, the composite material being made of carbon, silicon carbide and metallic silicon, or carbon and silicon carbide, prepared by impregnating carbon fibers and carbon other than carbon fibers with metallic silicon, having a porosity of 5% or less, and low in wettability with the brazing material, to allow the brazing material trickling down to, and accumulated on, the composite material surface to be easily scraped off, while leaving the surface substantially unaffected by the scraping works.

## Description

### Background of the Invention and Related Art Statement

The invention relates to a brazing jig to be used for production of various automobile members, e.g., those of aluminum.

Many of the conventional automobile members have been replaced by those of aluminum to reduce weight of automobiles, as requirements for, e.g., fuel economy become increasingly stringent. As a result, various members of aluminum are going into automobiles, and brazing is required to produce complex shapes of aluminum. At present, aluminum members are brazed by jigs of stainless steel, e.g., Type 304. These jigs are repeatedly exposed to rapid heat cycles between above 600°C, at which the brazing is effected, and room temperature (around 20°C). As a result, they are thermally deformed to produce strains, and must be frequently exchanged, because they can no longer show a sufficient flatness required for a brazing jig in 45 days or so.

A brazing jig of stainless steel, e.g., Type 304, is heavy at 8.0 g/cc as density, and high in coefficient of thermal expansion at 18.5×10⁻⁶/°C. Therefore, it needs much energy when handled, and is deformed in a relatively short time, because of thermal cycles between high and low temperatures to which it is repeatedly exposed. A brazing jig of stainless steel, e.g., Type 304, has another type of problems; part of a brazing material trickling down to and accumulated on the bottom surface of a jig during a brazing process, and the accumulated metal must be scraped off at adequate intervals. In order to reduce the scraping works, some jigs have a C/C composite member joined to the bottom section. A C/C composite, low in wettability with a brazing material and easily scraped off from the surface to which it is attached, is porous to have a porosity of approximately 20%. It is known that a brazing material penetrates into the pores, in particular those in the vicinity of the surface, to cause problems, e.g., exfoliation of part of the C/C composite together with the brazing material scraped off, greatly deteriorating the surface conditions of the C/C composite member and adversely affecting the next scraping works.

Brazing jigs in which drawbacks involved in those only made of stainless steel, e.g., Type 304, are solved have been proposed. For example, Japanese Patent Application No. 11-101257 (filed on April 8, 1999) discloses brazing jigs made of a composite material of carbon, silicon carbide and metallic silicon, or carbon and silicon carbide, which is prepared by impregnating carbon fibers and carbon other than carbon fibers with metallic silicon. The composite material has a density of around 2 g/cc, thermal conductivity of 50W/mK or more and coefficient of thermal expansion of 2.0×10⁻⁶/°C or less, and substantially remain not deformed even when repeatedly exposed to a high temperature exceeding 600°C for extended periods. These jigs have various advantages over the conventional ones made of stainless steel. They are lighter (density: around 2 g/cc) and handled more easily. Their high thermal conductivity of 50W/mK or more saves heat energy required for the brazing works. Their low coefficient of thermal expansion of 2.0×10⁻⁶/°C or less keeps them substantially not deformed even when they are repeatedly exposed to a high temperature exceeding 600°C for extended periods, with the result that they are serviceable continuously for extended periods, e.g., one year or longer, without being exchanged. However, they include the expensive composite materials, which tends to limit their applicable areas.

### Summary of the Invention

It is an object of the present invention to provide a brazing jig structurally made of stainless steel, e.g., Type 304, as a more common material, arranged with a material in such a way to allow the brazing material trickling down to and accumulated on the jig surface to be scraped off without causing special difficulties.

The inventors of the present invention have found, after having extensively studied to solve the problems involved in jigs of stainless steel, that the jig structurally made of stainless steel and arranged with a composite material at least on specific portions can solve these problems, reaching the present invention. The brazing jig of the present invention is structurally made of stainless steel, e.g., Type 304, which is arranged with a composite material at least on portions which come into contact with a member to be brazed and also on portions onto which the brazing material may trickle down during the brazing process. The composite material is composed of carbon, silicon carbide and metallic silicon, or carbon and silicon carbide obtained by impregnating carbon fibers and carbon other than carbon fibers with metallic silicon, and has a porosity of 5% or less and is low in wettability with the brazing material. The brazing jig of the present invention is continuously serviceable for extended periods, e.g., one year or longer, because it is arranged with the composite material having a porosity of 5% or less and low in wettability with the brazing material, to allow the brazing material trickling down to and accumulated on the composite material surface to be easily scraped off, while leaving the surface substantially unaffected by the scraping works.

### Brief Description of the Drawings

Fig. 1 is an oblique view that explains concept of the yarn assemblage;
Figs. 2(a) and 2(b) show the views of sections cut along the lines IIa-IIa and IIb-IIb in Fig. 1, respectively;
Figs. 3(a) and 3(b) show the views of sections cut along the lines IIa-IIa and IIb-IIb in Fig. 1, respectively; and
Fig. 4 is an oblique view, showing one of the preferred embodiments of the brazing jig of the present invention.

### Detailed Description of Preferred Embodiments

The brazing jig of the present invention is structurally made of stainless steel, e.g., Type 304, which is arranged with a composite material at least on those portions which come into contact with a member to be brazed and also on those portions onto which the brazing material may trickle down during the brazing process, characterized in that the composite material has a porosity of 5% or less, is low in wettability with the brazing material, allows the brazing material trickling down to and accumulated on the composite material surface to be easily scraped off, while leaving the surface substantially unaffected by the scraping works, and is made of carbon, silicon carbide and metallic silicon, or carbon and silicon carbide, prepared by impregnating carbon fibers and carbon other than carbon fibers with metallic silicon, the composite material being set on the basic jig structure by a heat-resistant fixing means, e.g., an adequate fixing means, inorganic adhesive, bolts and nuts, and fitting. For the basic jig structure, the jig model of stainless steel, e.g., Type 304, as the common material for the conventional jigs, is prepared in accordance with shape of a member to be brazed. It is arranged with the composite material, concretely described later, by an adequate fixing means at least on those portions which come into contact with a member to be brazed and also on those portions onto which the brazing material may trickle down during the brazing process, to form the brazing jig of the present invention. The composite materials useful for the present invention as the so-called protective film for a specific portion include those with a C/C composite as the basic skeleton surrounded by a matrix of Si-SiC or SiC composite material (Si-SiC-based or SiC-based composite materials).

The C/C composite described in this specification is a powdered binder working as the matrix for bundled carbon fibers, which are incorporated, after being sintered, with pitch, coke or the like as free carbon to the carbon fibers, and, as required, further with powdered phenolic resin or the like, to adjust the carbon fiber bundles. The bundle is then coated with a flexible film of a plastic, e.g., thermoplastic resin, to prepare preformed yarn as the flexible intermediate material. The preformed yarns are formed into a sheet or woven cloth by the method disclosed by JP-A-2-80639, which are placed one on another to have a desired number of layers, and then hot-pressed or sintered after being hot-pressed.

For production of the C/C composite as the basic material, several hundreds to several tens of thousands of carbon fibers, each having a diameter of around 10 µm, are bundled into a yarn; each yarn is coated with a thermoplastic resin to form a flexible fibrous intermediate material; these yarns are formed into a sheet by the method disclosed by JP-A-2-80639; these sheets are arranged two- or three-dimensionally into a unidirectional sheet or various types of cloths; these sheets or cloths are laminated into a fiber preform of desired shape; and the coating layer of thermoplastic resin made of an organic substance or the like over each of the fiber bundles is sintered and removed after being carbonized. In this specification, the description of JP-A-2-80639 is cited herein as a reference. The carbon component other than the carbon fibers for the C/C composite used for the present invention is preferably finely divided carbon, more preferably finely divided graphite.

The composite material for the present invention, composed of 55 to 75 wt.% of carbon, 1 to 10 wt.% of silicon and 10 to 50 wt.% of silicon carbide, is sometimes referred to as the Si-SiC-based composite material. It comprises yarn assemblies and matrix of the Si-SiC-based material, and has a porosity controlled at 5% or less, characterized in that the yarn assemblage comprises yarns containing at least carbon fiber bundles and carbon component other than the carbon fibers, and being oriented in the layer direction and three-dimensionally combined with and bound to each other to form a monolithic body, with the space between the yarns being filled with the matrix. It can be produced by the method disclosed by WO99/19273. The description of the above patent publication is cited as a reference.

The Si-SiC-based material, as described in this specification, is typically composed of silicon and silicon carbide phases, containing several different phases from a silicon phase composed of silicon remaining unreacted to a silicon carbide phase almost composed of pure silicon carbide, characterized in that the silicon carbide phase can contain an SiC coexisting phase in which silicon is present at an inclined content. Therefore, the Si-SiC-based material is a generic term for the systems in which carbon is present at a content in a range from 0 to 50 mole%. The Si-SiC-based composite material for the present invention has the matrix of the Si-SiC-based material.

The Si-SiC-based composite material preferably has a matrix of inclined silicon content, in which silicon content increases as distance from the yarn surface increases. In the Si-SiC-based composite material, the yarn assemblage of carbon fibers is preferably composed of two or more yarn sub-assemblies placed one on another, each sub-assemblage being composed of yarns arranged two-dimensionally to run in parallel to each other, characterized in that each yarn is a bundle of specific number of carbon fibers. Therefore, the Si-SiC-based composite material has a laminated structure with two or more layers of yarn sub-assemblies laminated in a specific direction.

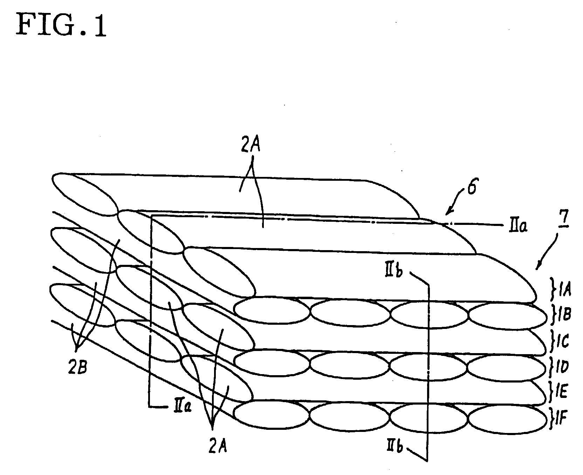

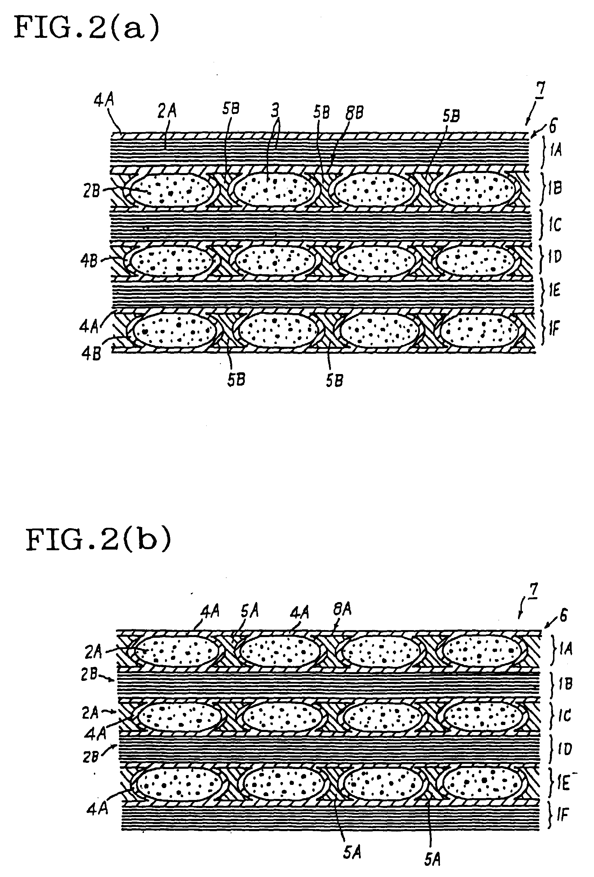

Fig. 1 shows an oblique view that explains concept of the yarn assemblage, and Figs. 2(a) and 2(b) show the views of sections cut along the lines IIa-IIa and IIb-IIb in Fig. 1, respectively. The Si-SiC-based composite material 7 is structurally formed by the yarn assemblage 6, which is composed of the yarn sub-assemblies 1A, 1B, 1C, 1D, 1E and 1F laminated in the vertical direction. Each yarn sub-assemblage is composed of the yarns 3 arranged two-dimensionally, almost in parallel to each other in the longitudinal direction. The longitudinal directions of the yarns in a yarn sub-assemblage are at right angles to those of the yarns in the sub-assemblage one above and below. More concretely, the longitudinal directions of the yarns 2A for each of the yarn sub-assemblies 1A, 1C and 1E are in parallel to each other and perpendicular to the directions of the yarns 2B for each of the yarn sub-assemblies 1B, 1D and 1F. Each yarn is composed of a fiber bundle 3 comprising carbon fibers and a carbon component other than the carbon fibers. The yarn sub-assemblies are laminated to form the yarn assemblage 6 of three-dimensional lattice structure. Each yarn is pressed during the pressing process, to have an almost elliptic section, as described later.

In each of the yarn sub-assemblies 1A, 1C and 1E, the space between adjacent yarns is filled with a matrix 8A, which extends along the yarn 2A surface. Similarly, in each of the yarn sub-assemblies 1B, 1D and 1F, the space between adjacent yarns is filled with a matrix 8B, which extends along the yarn 2B surface.

In this example, each of the matrices 8A and 8B is composed of the respective silicon carbide phases 4A and 4B covering each yarn surface, and respective Si-SiC-based material phases 5A and 5B, containing carbon at a lower content. The silicon carbide phase may contain silicon to some extent. There are the silicon carbide phases 4A and 4B formed between the vertically arranged yarns 2A and 2B in this example.

Each of the matrices 8A and 8B extends long and narrowly along each yarn surface, preferably straight. The matrices 8A and 8B are perpendicular to each other. The matrix 8A for each of the yarn sub-assemblies 1A, 1C and 1E is connected to the matrix 8B for each of the yarn sub-assemblies 1B, 1D and 1F at the respective space between the yarns 2A and 2B, with the result that the matrices 8A and 8B form a three-dimensional lattice structure as a whole.

The composite material composed of carbon and silicon carbide for the present invention is sometimes referred to as the SiC-based composite material. It is the composite material of SiC and C/C composite material having a structure composed of silicon carbide, the carbon fibers, carbon component other than the carbon fibers, and matrix formed in and around the skeleton. At least 50% of the silicon carbide is β type. Its skeleton is mainly composed of the carbon fibers and carbon component other than the carbon fibers, and may contain silicon carbide to some extent. The matrix is composed of silicon carbide, and combined monolithically with the skeleton. The composite material is also characterized by porosity of 5% or less, and two-peak type average pore size distribution.

The C/C composite composed of bundled carbon fibers serves as the skeleton for the SiC-based composite material. Therefore, each carbon fiber constituting the composite retains the carbon fiber structure intact, even when SiC is partly formed therein. As a result, the SiC-based composite material has a notable advantage of the inherent mechanical strength of the C/C composite almost retained intact or even enhanced in the presence of SiC, because the carbon fibers will not become short fibers even when they are partly transformed into SiC. Moreover, it has a composite structure with the matrix of the SiC-based material formed between the adjacent yarns in the yarn assemblage. This makes the SiC-based composite material differ from the Si-SiC-based composite material. The SiC-based composite material can be produced by the method disclosed by Japanese Patent Application No. 11-31979 filed on February 9, 1999 under the name of the present assignee. The description of the above patent publication is cited as a reference.

The SiC-based composite material for the present invention means a material which contains silicon carbide having varying degree of bonding to carbon, and is produced by the method disclosed in the above-mentioned Japanese Patent Application. In the present invention, the C/C composite is impregnated with metallic silicon, which reacts with the carbon atoms constituting the carbon fibers in the composite and/or with the free carbon atoms remaining on the carbon fiber surfaces, to be partly carbonized. As a result, partly carbonized silicon is formed on the outermost surfaces of the C/C composite and between the yarns of the carbon fibers. Thus, the matrix of silicon carbide is formed between the yarns.

The matrix can contain several different SiC phases, from the one in which trace quantities of silicon and carbon bond to each other to the one in which silicon carbide is totally crystallized. However, the matrix can contain metallic silicon only to an extent of detectable limit by X-ray (0.3 wt.%) or less. In other words, the matrix is typically composed of the silicon carbide phase, which can contain an SiC phase with silicon present at an inclined content. Therefore, the SiC-based material is a generic term for the systems in which carbon is present at a content in a range from 0.01 to 50 mole%. It is not practical to control carbon content at below 0.01 mole%, because quantity of metallic silicon must be controlled more strictly in consideration of free carbon present in the C/C composite, and more sophisticated temperature control is required. Theoretically, however, it is possible to control carbon content to 0.001 mole% or so.

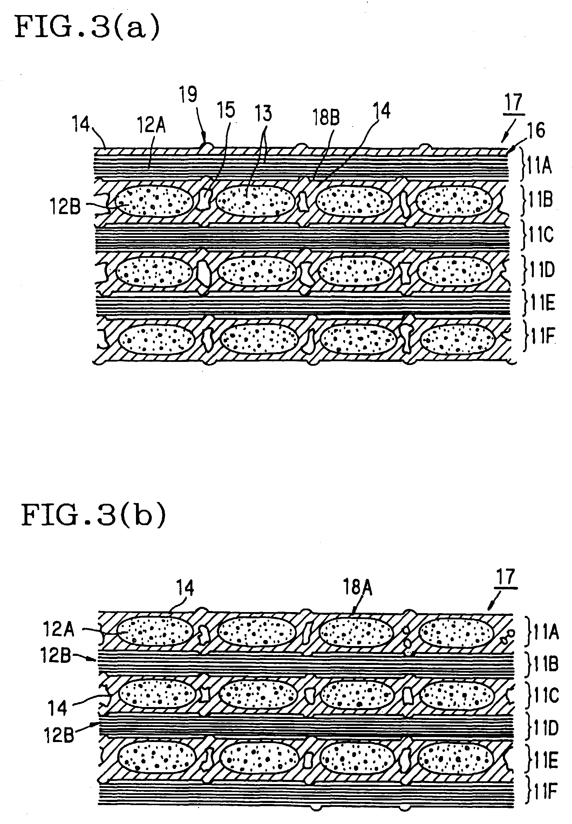

The Si-based composite material is described more concretely by referring to the attached drawings. The skeleton of the SiC-based composite material is basically the same as the one shown in Fig. 1. Figs. 3(a) and 3(b) show the views of sections of the SiC-based composite material according to the present invention cut along the lines IIa-IIa and IIb-IIb in Fig. 1, respectively.

The SiC-based composite material 17 is structurally formed by the yarn assemblage 16, as is the case with the Si-SiC-based composite material 7. The yarn assemblage 16 is composed of the yarn sub-assemblies 11A, 11B, 11C, 11D, 11E and 11F laminated in the vertical direction. Each yarn sub-assemblage is composed of the yarns 13 arranged two-dimensionally, almost in parallel to each other in the longitudinal direction. The longitudinal directions of the yarns in a yarn sub-assemblage are at right angles to those of the yarns in the sub-assemblage one above and below. More concretely, the longitudinal directions of the yarns 12A for each of the yarn sub-assemblies 11A, 11C and 11E are in parallel to each other and perpendicular to the directions of the yarns 12B for each of the yarn sub-assemblies 11B, 11D and 11F. Each yarn is composed of a fiber bundle 13 comprising carbon fibers and a carbon component other than the carbon fibers. The yarn sub-assemblies are laminated to form the yarn assemblage 16 of three-dimensional lattice structure. Each yarn is pressed during the pressing process, to have an almost elliptic section, as described later.

In each of the yarn sub-assemblies 11A, 11C and 11E, the space between adjacent yarns is filled with a matrix 18A, which extends along the yarn 12A surface. Similarly, in each of the yarn sub-assemblies 11B, 11D and 11F, the space between adjacent yarns is filled with a matrix 18B, which extends along the yarn 12B surface. As shown in Figs. 3(a) and 3(b), each of the matrices 18A and 18B is composed of the respective silicon carbide phases 14 covering each yarn surface. The silicon carbide phase may partly protrude from the surface as small projections 19, or into the carbon fiber layers within the composite material. Each of these projections 19 contains pores (voids 15) having a median pore diameter of around 100 µm. Most of these projections 19 are formed along the traces left by the carbon component, other than the carbon fibers, that constitute the stock C/C composite. It is therefore possible to control density of these projections 19 per unit area by adequately selecting distance between the yarns, and/or between the yarn sub-assemblies. The silicon carbide phase 14 may be formed also between the adjacent yarns 12A and 12B.

Each of the matrices 18A and 18B extends long and narrowly along each yarn surface, preferably straight. The matrices 18A and 18B are perpendicular to each other. The matrix 18A for each of the yarn sub-assemblies 11A, 11C and 11E is connected to the matrix 18B, at right angles to the matrix 18A, for each of the yarn sub-assemblies 11B, 11D and 11F at the respective space between the yarns 12A and 12B, with the result that the matrices 18A and 18B form a three-dimensional lattice structure as a whole.

Each of the above composite materials is low in wettability of the brazing material, and allows the brazing material trickling down to and accumulated on the jig to be easily scraped off, leaving the jig substantially unaffected by the scraping works, because the C/C composite as the skeleton is impregnated with silicon, at least to secure surface layer porosity of 0.5% or less. They are light (density: around 2 g/cc) and handled easily. Their low coefficient of thermal expansion of 2.0×10⁻⁶/°C or less keeps them substantially not damaged even when they are repeatedly exposed to a high temperature for extended periods. They are thermally good conductors (thermal conductivity: 50W/mK or more), and can be rapidly heated to a given temperature.

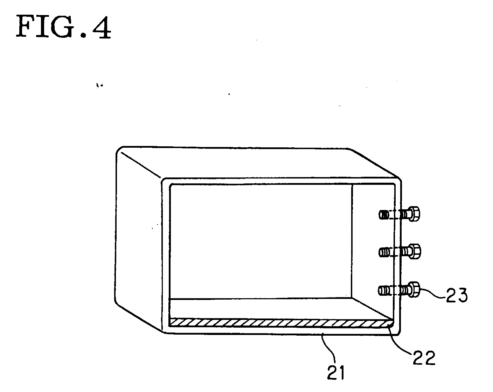

Fig. 4 shows one of the preferred embodiments of the brazing jig of the present invention. As described earlier, the brazing jig of the present invention may be formed to have a desired shape for specific purposes, and these shapes are known to experts in the related industry. In this embodiment, the composite material is used as the coating layer 22 for the bottom surface 21 of the brazing jig structure, and also for coating the clamping bolts 23, which are used to hold a member to be brazed, e.g., radiator member of aluminum, at least at a given clamping force. These clamping bolts 23 can be totally made of the composite material, as the case may be. In this embodiment, the composite material is fit to the bottom surface of the jig structure.

### Example

The present invention is described more concretely by the examples, which by no means limit the present invention.

### (Production Example of Coating Composite Material)

Approximately 10,000 long carbon fibers (diameter: 10 µm), oriented in one direction and impregnated with a phenolic resin, were bundled into a yarn, and the yarns were formed into a screen-shaped yarn sub-assemblage (prepreg sheet). These prepreg sheets were arranged in such a way to form a laminated assemblage, as shown in Fig. 1. The laminated assemblage was heated at 180°C in an oven to harden the phenolic resin, with which the carbon fibers were impregnated, at normal pressure, and then sintered at 2000°C in a nitrogen atmosphere. The sintered assemblage was cut and processed into a plate, 50 by 30 by 3 cm in size, over which Si powder, 99.9% pure and 1 mm in average particle size, was spread. The assemblage was then heated at 1300°C and 1 hPa in a sintering furnace in a flow of argon flowing at 20 NL/min for 4 hours. Temperature in the furnace was then increased to 1600°C, while pressure was kept unchanged, to impregnate the plate with Si. This resulted in a coating Si-SiC-based composite material composed of Si, Si-C and carbon fibers. It was fit to a brazing jig structure of Type 304, to produce the arranged jig. The prepreg sheet was used to hold a member to be brazed, and set to the jig using the bolts and nuts, prepared by the method in accordance with the one disclosed by JP-A-2000-81015.

A product of aluminum was brazed using the jig prepared above, and the brazing material accumulated on the jig surface was scraped off after it was used for 45 cycles. No exfoliation was observed on the composite material surface, nor penetration of the accumulated brazing material into the composite material by the visual examination.

The brazing jig of the present invention is structurally made of stainless steel, e.g., Type 304, which is arranged with the composite material at least on those portions which come into contact with a member to be brazed and also on those portions onto which the brazing material may trickle down during the brazing process. The composite material has a porosity of 5% or less and is low in wettability with the brazing material, to allow the brazing material trickling down to and accumulated on the composite material surface to be easily scraped off, while leaving the surface substantially unaffected by the scraping works. Therefore, the brazing jig of the present invention is continuously serviceable for extended periods, e.g., one year or longer. The composite material has a high thermal conductivity of 50W/mK or more, allowing it to efficiently utilize heat energy required for brazing, and hence save energy. Its low coefficient of thermal expansion of 2.0×10⁻⁶/°C or less keeps it substantially not deformed even when it is repeatedly exposed to a high temperature exceeding 600°C for extended periods. These properties also make the composite serviceable continuously for extended periods, e.g., one year or longer, as the coating material for the brazing jig.

There is provided a brazing jig structurally made of stainless steel, as a more common material, being arranged with a composite material at least on those portions which come into contact with a member to be brazed and also on portions onto which the brazing material may trickle down during the brazing process, the composite material being made of carbon, silicon carbide and metallic silicon, or carbon and silicon carbide, prepared by impregnating carbon fibers and carbon other than carbon fibers with metallic silicon, having a porosity of 5% or less, and low in wettability with the brazing material, to allow the brazing material trickling down to, and accumulated on, the composite material surface to be easily scraped off, while leaving the surface substantially unaffected by the scraping works.

## Claims

1. A brazing jig comprising a stainless steel and a composite material; said composite material is arranged on at least portions of the stainless steel as a brazing jig with which a material to be brazed is contacted, said composite material having a porosity of 5% or less and low wettability with a brazing material and being composed of carbon, silicon carbide and metallic silicon, or carbon and silicon carbide obtained by impregnating said carbon fibers and carbon other than carbon fibers with metallic silicon.

2. The brazing jig according to Claim 1,
wherein said composite material is composed of 55 to 75 wt.% of carbon, 1 to 10 wt.% of silicon and 10 to 50 wt.% of silicon carbide;
and said composite material comprising yarn assemblies and a matrix of a Si-SiC-based material, each of said yarn assemblies comprising yarns containing at least carbon fiber bundles and a carbon component other than said carbon fibers, and being oriented in a layer direction and three-dimensionally combined and integrally formed so as to avoid separation of the carbon fiber bundle and the carbon component into an assemblage of yarns, and
said matrix filling a space between said yarns in said yarn assemblage; and
has a dynamic friction coefficient of 0.05 to 0.6 and porosity controlled at 5% or less; or
said composite material comprises SiC and C/C composite material being composed of silicon carbide, carbon fibers, and carbon component other than said carbon fibers, and having a structure comprising a skeleton and a matrix formed in and around said skeleton,
at least 50% of said silicon carbide being β type,
said skeleton being mainly composed of said carbon fibers and a carbon component other than said carbon fibers, and possibly containing silicon carbide in a part of said skeleton, and
the matrix being composed of silicon carbide, and combined monolithically with said skeleton; and
has a porosity of 5% or less and two-peak type average pore size distribution.
